# EUROPEAN PATENT APPLICATION

(11) **EP 1 752 893 A2**
(43) Date of publication of application: **14.02.2007**
(21) Application number: 06121634.7
(22) Date of filing: 21.08.2003
(51) Int. Cl.: G06F 17/30

(54) **A method and apparatus for physically managing document data**

(30) Priority: 04.09.2002 EP 02078764
(62) Divisional of application: 03077646.2
(71) Applicant: Océ-Technologies B.V., 5914 CC Venlo (NL)
(72) Inventor: Thijssen, Abraham, 5821 BP Vierlingsbeek (NL); Lokerse, Sander Hendrik, 5912 TN Venlo (NL)
(74) Representative: Van de Sande, Jacobus

(57) **Abstract**

A method is proposed for physically managing data that represents an image for eventual presentation of the image to a user on the basis of the data. First, the data is acquired from an appropriate image source in a source representation. Next, data in source representation is selectively converted to data in destination representation, under selective storing of managed data as an intermediate item. In particular, first quantitative physical storage constraints associated to storing are assessed. Second, quantitative physical converting constraints associated to converting the stored managed information from said source version information to said presentation version information are assessed. The converting is executed before the storing, and/or after the storing, on a dynamic trade-off basis between the first and second assessing. Third, quantitative physical transfer constraints associated to transferring the managed information over a transfer facility are assessed, and the executing has a further dynamic trade-off basis through using the third assessing.

## Description

### BACKGROUND OF THE INVENTION

The invention relates to a storage management system for managing storage of different data format versions of a document, where a document is associated with a particular application program, and where the document is expressed in a particular data format belonging to said particular application program and a method for it.

It is observed that in the course of years application programs, like word processing programs, image editing programs, data base programs, video and audio recording and editing programs and the like are renewed regularly and new versions of these programs are brought to the market. Most of the time functionality is added to such a new version and necessarily the specific data format in which the output of these programs is coded is changed. It is desirable to have a storage management system that keeps track of version data of documents stored in the database and keeps track of version data of still available application programs. At the moment a new version of an application becomes available and is registered in the storage management system, the system decides, based on constraints, if it is appropriate to convert documents of a previous version to the most recent version.

To this end the storage management system according to the preamble comprises:
converting means for converting a document from a first data format to a second data format;
a first register for registering data format data of documents stored in a database;
a second register for registering data format data of valid application programs;
a third register for registering available conversions from one data format to another data format;
user interface means for updating the register of valid application programs by an operator; and
control means for automatically invoking a conversion from a first data format to a second data format, the second data format being associated with a valid application program, for all documents for which no valid application program is
available in the second register, after updating of the second register.
When the operator now indicates to the system that a certain application program no longer will be used and thus is indicated invalid the system automatically will make available the document in a new format, for which a valid application program is available. In this way, digital durability is obtained.

The invention further relates to a method for physically managing document data that has the stages of:
- first, acquiring the data that comprises the document itself, a document format, etc., from a source device, such as a scanner, a webcam, or a PC application,
- next, archiving the data on a server facility, and
- finally, coupling the data to a destination device, such as a printer, the web, or a PC application.

Destination devices present widely varying requirements for thereon presenting a document or image, the so-called destination profile, and a particular environment could have various different destination devices coexistently. Likewise, a particular source has a source profile, and a distributed system can have various source devices coexistently with non-uniform properties or profiles. Disregarding this variety would imply the sending of data to the destination(s) in a standard format that could be inconsistent with the destination's requirements for optimum operation, and thus necessitate local conversion. Converting to the destination's format only at the destination device itself, such as a printer, could bring about unwanted delays before the representation would be ready. Furthermore, the load on a transport or transfer facility to the destination device could be lowered through converting the document data to the standards of the destination device before such transport or transfer.

On the other hand, the archiving of the documents could already be in a form that accommodates the requirements of the destination device. Not knowing the actual destination device in question, this could in the presence of multiple destinations lead to unjustified storage requirements. Finally, the acquiring proper of the data by the source device could benefit from already knowing the actual destination device, so that appropriate values for various parameters could be set, as a preparation for allowing subsequent presentation being activated through a single-button command. Again, the above uncertainty regarding the actual destination would defeat this approach. In extensive set-ups or organisations the above problem could involve many variables that should all be set for attaining an optimum solution.

The present inventors have recognised that an optimisation could provide a method that incurs lower costs through a trade-off procedure that intends to solve the above problem.

### SUMMARY TO THE INVENTION

In consequence, amongst other things, it is an object of the present invention to improve the physical management procedure of data that represents a document, with regard to quantitative physical constraints associated to the various stages of such management, such as would be associated to processing time, storage facility availability, capacity of a transfer facility, deadlines that may be set for certain results, quality-of-service, and various others, whilst all the time maintaining system consistency, and at least to an appreciable degree meeting the above single control button requirement. Now therefore, according to one of its aspects the invention is characterised according to the characterising part of Claim 1.

The various quantitative physical constraints may be expressed in a single quantity or weight factor for rendering them comparable in making the trade-off, such as a particular cost metric, hereinafter usually cost for short. Such comparison may, but need not, be made in terms of money. Another mapping could be the percentage of use of a particular facility. The invention wills optimise the eventual choice on the basis of the above single quantity. The various trade-off's are dynamic, in that they may be determined by the interactions between multiple demands on the various resources, the availability of those various resources themselves, and other. The decision on the trade-off's may be made through consulting a rule base for deciding on the specific format(s) or representations. Such rule base may include various particular parameters, such as a subscription or another type of contract for a particular customer, restrictions associated to the time-of-day, a quotum assigned to a particular customer or account, the total financial costs, and various others.

The invention also relates to an apparatus being arranged for implementing a method as claimed in Claim 3 and to a computer program product. Further advantageous aspects of the present invention are recited in dependent Claims.

### BRIEF DESCRIPTION OF THE DRAWING

These and further aspects and advantages of the invention will be discussed more in detail hereinafter with reference to the disclosure of preferred embodiments, and in particular with reference to the appended Figures that show:
Figure 1, a diagram of a global scan-server architecture for use with the present invention;
Figure 2, a diagram of a server facility for use with the present invention;
Figure 3, a global system architecture according to the present invention;
Figure 4, a recipe example for use with the present invention;
Figure 5, an example diagram showing various linked converters;
Figure 6, a block diagram of an overall system applying the present invention.

### FURTHER ASPECTS OF THE IMAGE DATA REPRESENTATION SERVER

When generating data for storage in a server archive, an operator should preferably be relieved from the requirement to set all parameters that could be applicable to the subsequent representation. One particularly advantageous policy therefor, could be to operate the source device on its highest possible generating quality level, such as at maximum resolution for a scanner device. Alternatively, this highest necessary quality could be codetermined by the eventual requirements by a user; and such could in fact lead to lower actual requirements.

Seen from the destination side, the user should be able to select the particular data for retrieval, through sending a communication request that specifies an intended destination profile. If such profile is not immediately available at the server, later conversion of actually stored image data may yet produce what the destination wants. The conversion will be effected through traversing a path of one or more conversion mechanisms available either locally or on the network. Next, the result of the conversion will be stored in the archive as a representation of the original data. Doing so, the next time in principle the result of the conversion will not have to be generated again. The conversion may be effected either on the basis of the original data, or on the basis of an intermediate conversion result. The latter procedure will generally necessitate less conversion effort. The converter will seek the shortest or fastest conversion path to the desired representation. At the server, various procedures will see that superfluous representations will be deleted, or that certain representations will be generated immediately on receipt of the original data. Various advantages of the present invention are the following:
- The generating of the representations for a requesting destination device will allow to guarantee system consistence. A particular example is to execute a conversion with an optimum procedure for printing scanned images on a variety of machines.
- Inasmuch as a user will not need to worry on the quality of stored images, or on the particular representation that will be retrieved from the data base, a single-button activation of the representation will be made possible. This applies both to the acquiring side of the system and also to the destination side.
- By avoiding the sending of superfluous data to the destination, the transport load of the network will be significantly lower. The original representation will yet be kept available, so that no loss of data will occur.
- Through generating a particular representation only once, processing time for subsequent requests for the same data will generally be kept at a minimum. This will also apply to a case where the same image will be converted to a plurality of representations that are usable in parallel, such as a bitmap representation in parallel to an ASCII coded text representation obtained by optical character recognition.

### DETAILED DESCRIPTION OF PREFERRED EMBODIMENTS

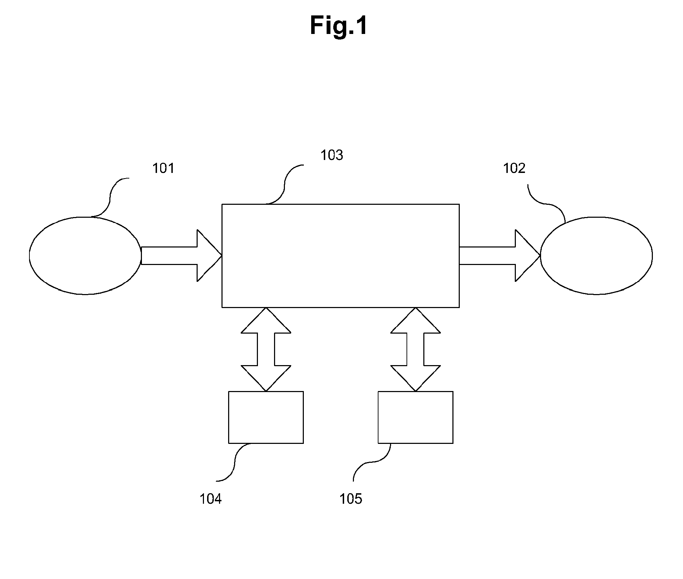

Figure 1 illustrates a diagram of a global architecture for use with the present invention. Module 101 represents a source for image data that will generally be formed from pixels of a single image. The representation may be various, first regarding the constitution of a single pixel that may be coloured or black/white and may have an appropriate number of bits. Second, the image configuration may be various, in view of the arrangement of the pixels, such as by way of the image resolution, and the size and shape of the image. Furthermore, the pixels could have certain attributes such as temporally changing through blinking, and the like. Finally, the nature of the source device may influence the organisation of the presentation, such as a line scanner versus a PC based presentation. For the present invention, the content of the image, in the sense of "meaning" is left out of consideration.

Module 102 represents the destination, where a user will want the image for further application. Here, the representation may be again various. Next to the various representations of the complete image that are appropriate to particular destination devices, a specific representation will be the so-called thumbnail version that is used for an extremely compact representation, such as for allowing on-the-fly viewing or printing of a plurality of images or pages on a single frame or sheet. This would for example allow a very quick view or mental note of the overall content of a multi-page document. Module 103 represents the ImageBase manager that controls the transport of images from source to destination, and also the interaction with modules 104 and 105. Module 105 represents a storage facility for storing images in the representations that are considered advantageous for attaining a good operation of the overall system: allow the destination to get the right representation of the images within an acceptable delay. Module 104 represents various converters that convert the source image in one or more steps to a destination image.

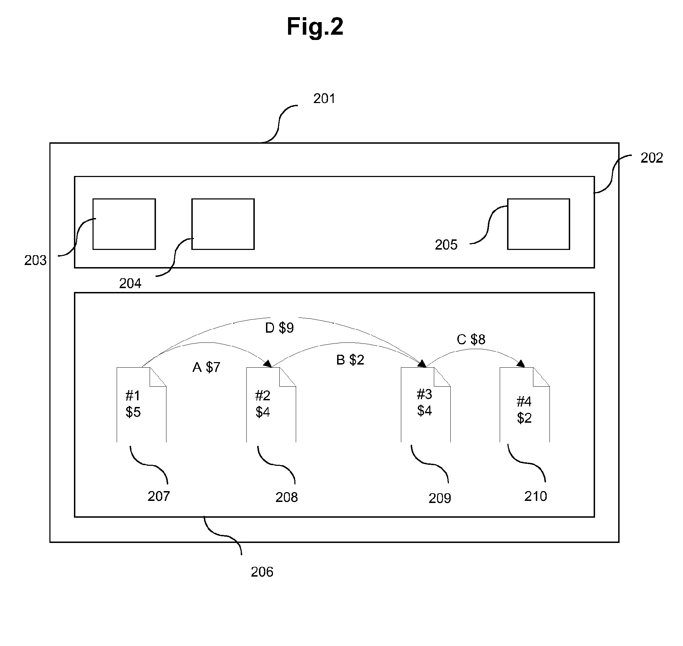

Figure 2 illustrates a diagram of a server facility for use with the present invention. The overall server facility 201 has an upper part 202 that contains the logic, as having various modules of which modules 203, 204 and 205 have been shown symbolically. Module 203 may contain a rule base, cf. hereinafter for further disclosure. Furthermore, the lower part 206 contains the database as having various stored data items of which data items 207, 208, 209 and 210 have been shown symbolically, and which represent as many representations #1, #2, #3, #4 of a single image that has been symbolised as a page. In addition, the costs of storage have been indicated as being 5, 4, 4, and 2, respectively. In an elementary organisation, these costs may indicate an amount of storage space required for storing the version in question. In the first place, such storage costs are relative to each other, so that a cost of "4" is two times as high as a cost of "2". Furthermore, inasmuch as later on other cost categories will also be used, such as for conversion or transmission, the rule base used for the system may undertake to assign an absolute measure to the cost. This could be done in various manners. A first one is to relate the storage space to an overall available storage capacity. For example, if total storage is 100%, and a particular item requires 1% thereof, the assigned cost could be an absolute value of 1. Still another approach would be to assign such absolute costs through a trial and error procedure, or through simulation. Regarding the present invention, the cost of storage does not relate to the duration of the actual storage in question.

Furthermore, between various pairs of representations, respective arrows symbolise a conversion therebetween. Each arrow is based on a recipe a, b, c, d, and each recipe has an associated amount of quantitative physical constraints or cost, to wit 7, 2, 8, 9, respectively. As an example, the converting between representation #2 and representation #3 needs recipe b, and brings about a cost of 2. In an elementary organisation, these costs may indicate an amount of processing time required for executing the recipe in question. In practice, the cost of a particular recipe, such as black/white clipping, may be non-uniform, but may depend on the size of an image, as measured in its number of pixels. For the present embodiment, this effect will again be disregarded. Here again, the costs as indicated are in first instance relative. For comparison with other cost categories, also here the system may undertake to assign absolute values to the various cost values, however. In this respect, the processing time necessary for a particular conversion may be compared with some overall processing interval, such as the time necessary to read or write the overall available memory space, or another useful time interval. Still another procedure would be to set this overall interval at some useful value, such as in a trial and error procedure.

Furthermore, a third category of costs for on the basis thereof finding an optimum trade-off, are transmission costs over the network facility. Again, such costs may be expressed in a relative manner, as the various time intervals necessary for effecting the transport in question. In addition, these values have their relative size as compared with each other. For comparison with other cost categories, also here the system may undertake to assign absolute values to the various cost values, however. In this respect, the transfer time necessary for a particular transfer may be compared with some overall operational interval, such as the time necessary to read or write the overall available memory space, or another useful interval. Still another procedure would be to set this overall interval at some useful value, such as in a trial and error procedure. If now all three cost categories have rotten assigned absolute values, their use can be compared with each other for attaining eventually an optimum solution.

A still further category of costs is caused by delay. This may be caused both by the conversion process and also on the transfer process. As such this could be included in the other cost categories. A particular aspect is however, that an overly long delay could be fully unacceptable. In such case, virtual costs may be imposed that run nonlinearly with the actual length of the delay, but will steeply rise above a certain threshold therefor. The virtual costs may be superimposed on or added to the other costs. Another cost category would be quality-of-service.

Now, representation #1 is assumed to be a scanned original generated by a producer. The characteristics of the image are described by a source profile that depends on the generator, which produced the image. A consumer may now ask for one or more images, such as a sheet or an article. By communicating the destination profile, the logic will search for the representation in the database. If not available immediately, the logic will generate the representation, that is optimised for the consumer in question. The amount of costs incurred in this way may depend on various aspects, such as resources available or licenses to be paid. One objective should be the optimum use of the various resources available. After generating the representation, it will in principle be stored in the database.

Now, in particular, block 203 is arranged for executing an Automatic Representation Management ARM that executes a strategy for filling the database as being based on a set of rules. Two types of widely applicable rules will be considered. First, there are persistency rules such as:
- Always store a representation in the database that has been generated recently. This procedure operates faster when representations will be asked for more than once. However, the database will grow quite fast.
- Never store a representation in the database that has been generated recently, but keep the old one. This procedure operates slower when representations will be asked for more than once. However, the database will grow much more slowly. Of course, intermediate approaches between the above two could be used, such as those being dependent on history.

Furthermore, other rules will base on garbage collection, such as:
- Remove all derived representations that have not been asked for during a certain time interval, and keep only the original version anyway.
- Remove all derived representations that have not been asked for at least X times during a certain time and keep only the original version anyway.
- Remove all derived representations from the database and keep only the original version as governed by the cost comparison expression C(storage) ≥ C(conversion from old representation to new representation), wherein C indicates the costs associated to the two respective procedures.

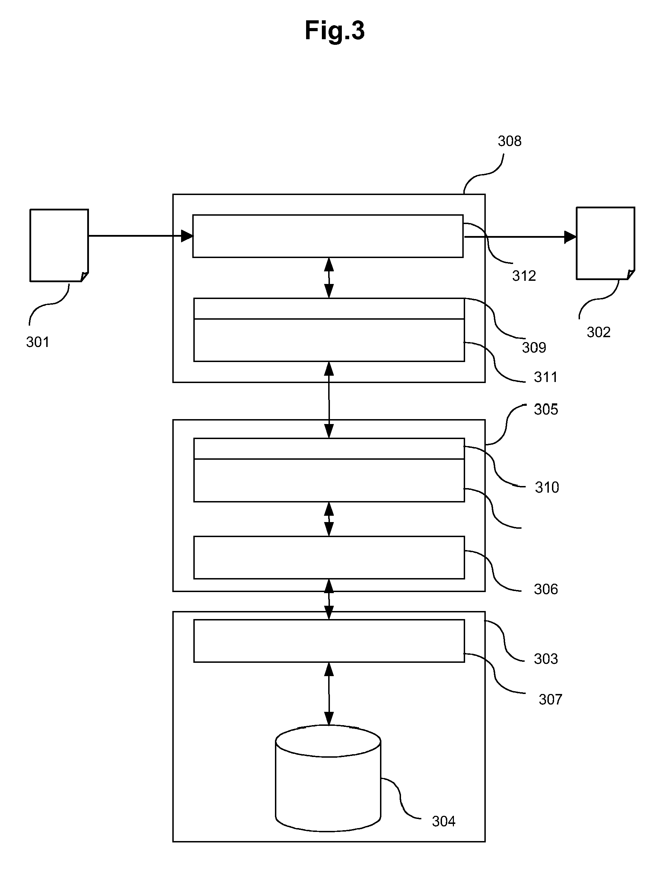

Figure 3 illustrates a global system architecture according to the present invention, which as shown, is conceptually positioned intermediate between an input image 301 and an output image 302. The architecture has three layers, to wit, a data base layer 303 that manages the data scheme set up for storing the images and their different representations in an object-oriented database 304. Next, server layer 305 stores, retrieves, modifies, and deletes data through a Database Interface 306, 307 provided by the database layer 303. Finally, client layer or application layer 308 comprises an application 312, such as scanning, printing, and viewing. An Interface 309, 310 has been defined for communicating between the application and the server layer, while defining the basic functionality for the application layer. Furthermore, a remote Interface 311 allows a remote connection to the server layer.

The interface between application layer and server layer defines the server's connection to the outside world, and makes clear what exactly should be stored in the database. An exemplary set of calls may contain: AddImage, GetImage, CreateRepresentation, GetProfileList, GetProfile, AddProfile, DeleteProfile .

An exemplary interface between the image base manager and the converter engine may contain the following items: CalculateCost, DoProcess

Further to the above, an interface allows several different clients to coexistently invoke an interface dispatched by a server application. Multiple access by diverse clients needs a locking mechanism to prevent the database from becoming inconsistent. By itself, locking mechanisms on various different levels of granularity in time and space have been developed in the art, and for brevity, no further discussion has been given thereof. At the end of each particular call, the database is left in a defined state for this purpose.

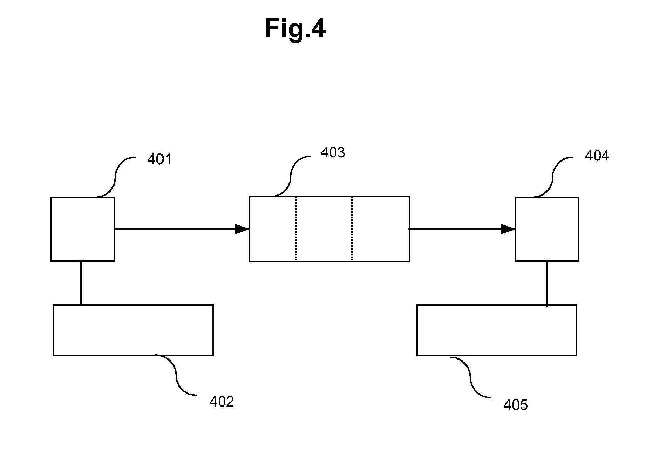

Figure 4 illustrates a recipe example for use with the present invention. By itself, a wide variety of image conversions would be obvious from the present disclosure to persons skilled in the art, and in consequence, only a single sequence of recipes will be discussed hereinafter. In Figure 4, an initial representation of the image 401 is input at left. This may be an original representation, but may in fact be as well an intermediate representation that has already been converted in earlier steps not shown. As indicated, this representation has a source profile 402 indicating it has a true grey scale and eight bits per pixel. The recipe for conversion 403 has three successive steps that in fact could each represent separate recipes as well. First, the image is smoothed. In this conventional procedure, pixeled edges in the image are smoothed, so that acute angles are smoothed to a certain extent, discontinuous, e.g. dropout pixels, are adapted to their neighbour's values to a certain extent, and the like. Second, the image is sharpened. This procedure will enhance edges, so that the result of the processing will more clearly exhibit distinguished features of the elements of the image. Third, the result is subjected to a halftone procedure to give the eventual representation 404. This representation has the destination profile 405 that is black/white with true representation at 1 bit per pixel. None of the various conversions discussed herein addresses the meaning of the image, although the scope of the conversions may be very broad. Next to converting colour to black and white, the conversion may give false colour, modify the grey scale, enhance certain image elements, amend the dynamic colour range, invert black and white, amend additive to subtractive colours and vice versa, change RYB to YUV colour schemes, introduce blinking, and many others. However, the present invention does not use an overall assessment of an image's content or meaning, inasmuch as such would require still other procedures to be introduced.

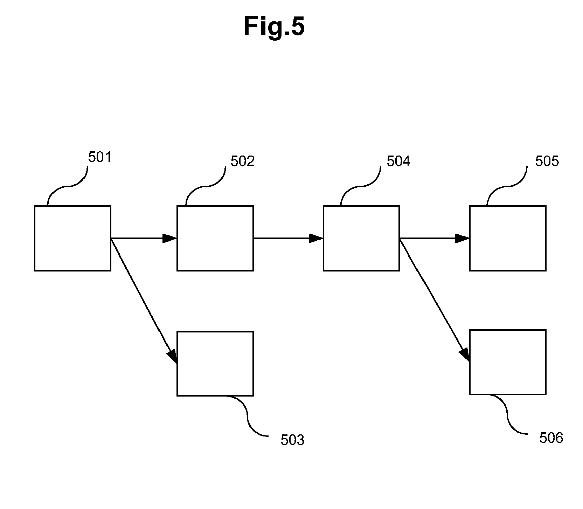

Figure 5 illustrates an example diagram showing various linked converters 501 through 506. As shown, the result of converter 501 may be used by converter 502 as well as by converter 503. The result of converter 502 is exclusively used by converter 504. Furthermore, the result of converter 504 may be used by converter 505 as well as by converter 506. The results of converters 503, 505 and 506 could be useful for an applicable destination. In principle, the result from two separate converters could join to give identical results. One possible occurrence thereof could be identical converters being present at respective different locations in the network, possibly combined with distributed storage facilities before, between, or after the conversion.

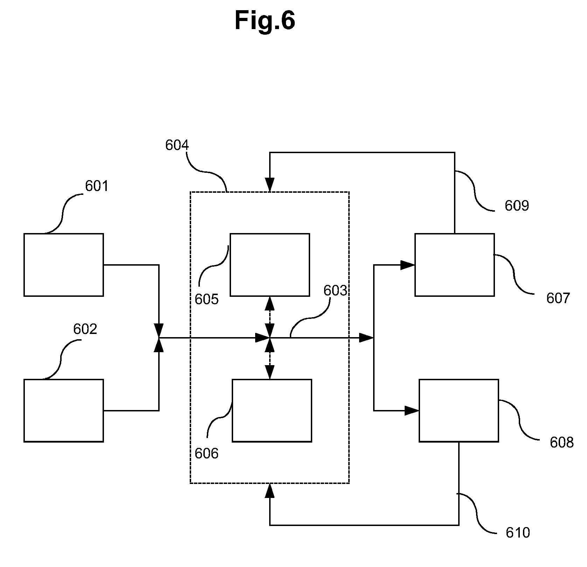

Figure 6 illustrates a block diagram of an overall system applying the present invention. At left, source devices 601, 602 may generate images in their respective idiosyncratic profiles for transfer via transfer facility 603. In the middle, data management is executed through facility 604 that comprises server facility 605 and data base facility 606, which will bidirectionally interface to transfer facility 603. At right, destination facilities 607 and 608 will receive images according to their respective idiosyncratic destination profiles from the transfer facility 603. Furthermore, user requests will be sent on lines 609, 610 to the central data management facility 604. The transfer facility 603 has not been detailed, but persons skilled in the art will know how to map such on standard network concepts, or more in general, on a transfer organisation that distinguishes in a correct manner between data, control signals, and service signals. Furthermore, requests for source facilities 601, 602, could be entered as well into transfer facility 603, or be communicated on separate connections not shown for brevity. In addition, sources and destinations have been indicated in a blockwise manner only for brevity.
In a manner similar to the method disclosed in the previous description, a storage management system is presented for managing storage of different versions of a particular document. For this purpose a version is defined by a specific version of an application, with which the document is generated or with which the document can be processed or accessed. It is observed that in the course of years application programs, like word processing programs, image editing programs, data base programs, video and audio recording and editing programs and the like are renewed regularly and new versions of these programs are brought to the market. Most of the time functionality is added to such a new version and necessarily the specific data format in which the output of these programs is coded is changed. The storage management system at hand now keeps track of version data of documents stored in the database and keeps track of version data of still available application programs. At the moment a new version of an application becomes available and is registered in the storage management system, the system decides, based on constraints, if it is appropriate to convert documents of a previous version to the most recent version. This leads to a storage management system for managing storage of different data format versions of a document, where a document is associated with a particular application program, and where the document is expressed in a particular data format belonging to said particular application program; the system comprising: converting means for converting a document from a first data format to a second data format; a first register for registering data format data of documents stored in a database; a second register for registering data format data of valid application programs; a third register for registering available conversions from one data format to another data format; user interface means for updating the register of valid application programs by an operator; and control means for automatically invoking a conversion from a first data format to a second data format, the second data format being associated with a valid application program, for all documents for which no valid application program is available in the second register, after updating of the second register.
When the operator now indicates to the system that a certain application program no longer will be used and thus is indicated invalid the system automatically will make available the document in a new format, for which a valid application program is available. In this way, digital durability is obtained.

## Claims

1. A storage management system for managing storage of different data format versions of a document, where a document is associated with a particular application program, and where the document is expressed in a particular data format belonging to said particular application program, the system comprising:
converting means for converting a document from a first data format to a second data format;
a first register for registering data format data of documents stored in a database;
a second register for registering data format data of valid application programs;
a third register for registering available conversions from one data format to another data format;
user interface means for updating the register of valid application programs by an operator; and
control means for automatically invoking a conversion from a first data format to a second data format, the second data format being associated with a valid application program, for all documents for which no valid application program is available in the second register, after updating of the second register.

2. A method for managing storage of different data format versions of a document, where a document is associated with a particular application program, and where the document is expressed in a particular data format belonging to said particular application program, said method comprising the steps of:
registering data format data of documents stored in a database in a first register;
registering data format data of valid application programs in a second register;
registering available conversions from one data format to another data format in a third register;
automatically converting documents from a first data format to a second data format, the second data format being associated with a valid application program, for all documents for which no valid application program is available in the second register, after updating of the second register by an operator.

3. A method according claim 2, further comprising the steps of:
acquiring said document, expressed in a particular data format, from an appropriate document source (101) in a first data format;
first assessing quantitative physical storage constraints associated to storing documents in the first data format;
second assessing quantitative physical converting constraints associated to converting said document from said first data format to said second data format;
and executing said automatically converting before said storing, and/or after said storing, respectively, on a dynamic trade-off basis between said first assessing and said second assessing, whilst further considering one or more applicable source profiles (402) and one or more applicable destination profiles (405).

4. A method as claimed in Claim 3, furthermore comprising the steps of:
third assessing quantitative physical transfer constraints associated to transferring said document over a transfer facility (603) of an applicable distributed system,
and in said executing having a further dynamic trade-off basis through applying said third assessing.

5. A method as claimed in Claims 2-4, wherein said document essentially relates to an image.

6. A method as claimed in Claim 4, wherein said quantitative physical storage constraints base on storage space availability, said quantitative physical converting constraints base on destination delay allowability, and said quantitative physical transfer constraints base on transfer facility availability and/or transfer duration.

7. A method as claimed in Claim 6, wherein said quantitative physical converting constraints and/or quantitative physical transfer constraints base on a quality-of-service metric.

8. A method as claimed in Claim 4, wherein said quantitative physical storage constraints, said quantitative physical converting constraints, and said quantitative physical transfer constraints are made comparable through assigning to such respective constraints appropriate absolute values of a cost metric.

9. A method as claimed in Claim 3, executed through consulting a rule base (203).

10. A method as claimed in Claim 3, wherein said converting is effected in a sequence of sub-conversions (502, 504) to produce one or more intermediate representations, and allowing to store such intermediate representation in lieu of storing an eventual second data format.

11. A method as claimed in Claim 3, whilst optimally assigning available storage space to the storing of various documents in various representations to cater for future user requests for image presentations.

12. A method as claimed in Claim 11, and allowing coexistent storage of a particular document in a plurality of different representations.

13. A method as claimed in Claim 3, whilst maintaining document data in said database as being governed by one or more persistency rules.

14. A method as claimed in Claim 3, whilst maintaining document data in said database as being governed by one or more garbage collection rules.

15. A method as claimed in Claim 3, and allowing furthermore image presentation in a thumbnail version.

16. A method as claimed in Claim 3, whilst substantially uniformly operating a source device on its highest possible image presenting quality level.

17. A method as claimed in Claim 3, whilst operating a source device in particular at an image processing level quality that is at least co-determined by eventual requirements associated to an intended user device and/or application.

18. A method as claimed in Claim 3, whilst allowing an application (312) to invoke a remote server facility (305) through a remote interface (311).

19. A method as claimed in Claim 3, and providing for operation with multiple users a data consistency maintaining through an appropriate locking mechanism.

20. An apparatus (103, 104, 105) being arranged for executing a method as claimed in Claim 4 for physical managing of information that represents a document for eventual presentation of said document to a user on the basis of said data on a destination means, said apparatus comprising:
acquiring means for acquiring said information from an appropriate document source (101) in a first data format;
assessing means (203) for assessing first quantitative physical storage constraints associated to storing said managed information, second quantitative converting constraints associated to converting said stored data in source representation to said data in destination representation and third quantitative physical transferring constraints associated to transferring said managed data over a transfer facility; and
execution means for executing said automatically converting before said storing, and/or after said storing and/or after said transferring on a dynamic trade-off basis produced by said assessing means.

21. A system according to claim 1 comprising one or more source facilities (601, 602), one or more destination facilities (607, 608), being linked with each other through a transfer facility (603), and comprising an apparatus for physically managing of information (605, 606) as claimed in Claim 20.

22. A computer program product having a set of instructions to cause, when in use on a general-purpose computer, said computer to perform the steps of the managing method of any one of claims 2-19.
